# EUROPEAN PATENT APPLICATION

(11) **EP 2 634 298 A1**
(43) Date of publication of application: **04.09.2013**
(21) Application number: 12157976.7
(22) Date of filing: 02.03.2012
(51) Int. Cl.: D03D 13/00, D03D 9/00, B32B 27/12

(54) **Agricultural covering**

(71) Applicant: Beaulieu Technical Textiles N.V., 7780 Komen (BE)
(72) Inventor: Verlinde, Ward, 8902 Hollebeke (BE); Norga, Carl, 9770 Kruishoutem (BE); Dejaeghere, Jean Luc, 9800 Deinze (BE)
(74) Representative: Michalski Hüttermann & Partner Patentanwälte

(57) **Abstract**

The present invention is directed to an agricultural covering in form of a woven plastic fabric (10) that includes an area (25) having a lower density of warp threads (12) per unit width compared to the adjacent areas (24, 26) adapted for effortless and effective threading of a securing element (30) through the fabric (10) to encircle a plurality of weft threads (14). By providing multiple reinforced areas (28) spaced in machine direction (120) and extending in a cross-machine direction (140) of the fabric (10), the tear propagation resistance, and/or the weathering resistance and/or the tensile strength of the fabric (10) is improved. By applying a plastic coating (18) such that a strip (22) adjacent to each of the border edges (16) is left uncoated and by attaching the securing element (30) to the fabric (10) in the uncoated strip (22), the breaking load is increased.

## Description

### TECHNICAL FIELD OF THE INVENTION

The present invention relates to woven fabrics, more particularly, to a woven plastic fabric for agricultural use and method for making such.

### BACKGROUND OF THE INVENTION

With the aim of extending the season of various fruits, such as, for example, table grapes, cherries, and soft berry fruits, the use of coverings, such as plastic covers installed to form a canopy, has become very popular and common in agriculture, to the point that it is now considered almost essential for producers looking to satisfy market demand. When placed over the plants in late winter-early spring, such coverings raise the air temperature below the installed coverings, and early fruiting and harvesting can be induced. In late fruit varieties harvesting may be delayed by installing coverings extending the time span the fruits may be offered on the market. Additionally, such a covering protects plants and fruits against damage from rain, hail, or wind. For example, excessive rain during the time approaching harvest can have a seriously deleterious effect on table grapes which may develop a variety of diseases or the grapes itself may burst open if they remain wet for too long. As a result a good crop can be seriously affected, both in quality and quantity. Furthermore, such a covering can reduce the temperature dissipation during night and reduce the plant stress coming from high energetic sunrays through a light diffusion effect and/or light filtering effect.

Examples for such coverings are agricultural films, woven fabric sheets, foils, or nets. The coverings are typically tied with tie-down ropes, also called guy ropes or tie-down strings, to structures such as poles or wires or to the ground. In order to do so, the tie-down ropes have to be attached to the plastic cover in a matter that is reliable, inexpensive, and easily done without undue labor. This is currently typically done by integrating holes into the coverings, for example, by moving the strands aside to make a hole, by interweaving an additional and stronger warp thread to position weft threads to form an opening in the fabric (see, for example, JP 10292245), by cutting holes, or by putting eyelets or grommets, such as metal grommets (see, for example, EP1728417), into a border region of the coverings, through which a tie-down rope or other securing element can be placed. Other methods to attach the coverings to a structure or to the ground include using clamps or clips trapping the covering (see, for example, US 5,557,830). While clamps are very effective and distribute the load over a wider range of the covering, they are bulky and expensive. Therefore, clamps typically have to be removed from the covering at the end of each season for storage and then re-attached to the covering at the begin of the following season, which is labor intensive. In order to avoid tearing in the area of the holes or clamps due to the stress induced when the coverings are under tension, the areas of the coverings where the holes or clamps are positioned are often reinforced (see, for example, US 4,044,501). To improve or achieve water impermeability of the coverings and to increase the breaking strength of the coverings, a plastic coating is often applied to at least on side of the covering. But application of such a coating comes with the disadvantage of decreasing the tear resistance and tear propagation resistance of the covering.

As problem with existing plant and fruit coverings still remains the attachment or anchoring of the coverings to structures or to the ground that does not lead to tearing of the covering under tension, particularly as a result of wind action on the covering while being practical and inexpensive. A further unsolved problem with known prior art woven coverings is the unlimited (in machine direction) tear propagation of the impermeable part of the cover.

### SUMMARY OF THE INVENTION

It is an object of the present invention to provide an agricultural covering in form of a woven plastic fabric and a method for making the same. An advantage of embodiments of the present invention is that forming an area having a lower density of warp threads per unit width within an area having a higher density of warp threads per unit width can easily be done during the weaving process and at lower costs. Additionally, the elimination of metal eyelets or grommets facilitates the process of recycling the coverings that have ended their cycle life. The area having a lower density of warp threads per unit width is large enough to allow effortless threading of a securing element, for example a tie-down rope, through the fabric to encircle a plurality of weft threads and at the same time small enough not to cause a substantial loss of overall strength of the fabric. A further advantage of embodiments of the present invention is that due to the elastic nature of, for example, polyethylene, polyamide, polypropylene, ethylene-vinyl acetate, or any other polymer material, the encircled weft threads extend and bunch together when the securing element is under tension. Additionally, the weft threads have a relatively high Youngs modulus and a relatively high elongation at break. Therefore, each of the encircled weft threads contributes to the overall result because the stress and strain are shared between all the weft threads in the bunch. As a result, a stress raising point of neighboring weft and warp threads will not be created. Accordingly, the fabric has an improved resistance to tearing and tensile forces compared to prior art fabrics typically used as agricultural coverings. It is a still further advantage of embodiments of the present invention that once installed the securing elements, for example the tie-down ropes, can be left in place when the covering is rolled for storage, since there is only an insignificant increase in volume. As the fabric sheets of the coverings might be very long, for example about 100 meters, any increase in thickness would accumulate and cause problems. By leaving the tie-down ropes in place there is no need to rethread them and the covering is ready for the next season once unrolled.

The above objective is accomplished by a system and a method, according to the present invention.

Particular and preferred aspects of the invention are set out in the accompanying independent and dependent claims. Features from the dependent claims may be combined with features of the independent claims and with features of other dependent claims as appropriate and not merely as explicitly set out in the claims.

According to the advantageous embodiments of the present invention, a plastic fabric woven from warp threads extending in machine direction and weft threads extending in cross-machine direction, the width of the fabric being defined by two border edges running along the machine direction, comprises a waterproof plastic coating applied to at least one surface of the fabric, the coating covering the fabric partially leaving a strip adjacent to each of the borders uncoated. Leaving the strip uncoated is advantageous since a center portion of the fabric is mechanically strengthened in addition to being made impermeable, while the uncoated strip remains un-strengthened allowing the weft threads to bunch together when the securing element encircling the weft threads is under tension resulting in a combination of high tensile strength and high tear propagation resistance of the uncoated strip. The plastic coating is extruded onto the fabric. The plastic fabric has a first area with a first density of warp threads per unit width of the fabric and second areas with a second density of warp threads per unit width of the fabric positioned on either side of the first area and running along with the first ales in machine direction, the second density being lower than the first density, the second areas being located within the uncoated strips, and the second areas extending over the entire length of the fabric. The second density is adapted to allow threading of a securing element through the fabric in machine direction. Utilizing an area having a lower density of warp threads per unit width of the fabric is advantageous for effortlessly threading the securing element through the fabric. By interweaving the weft threads with the warp threads to form the woven fabric, the fabric provides light diffusion, which has typically a positive influence on the regular growth of fruits with improved coloring and ripening.

In accordance with a further embodiment of the present invention, the plastic fabric further comprises third areas, the third areas being located between the second areas and the border edges, and the third areas having a higher density of warp threads per unit width of the fabric than the second areas. The density of warp threads per unit width of the fabric in the third areas can be the same as or similar to the one of the first areas. Positioning the third areas between the second areas and the border edges is advantageous since it strengthens the border edges.

In further embodiments of the present invention, the second areas are manufactured by omitting warp threads during the weaving process. This is advantages since it is then possible that a securing element is threaded through the weft threads with ease. The securing element is threaded through the weft threads to encircle a plurality of weft threads in the second area. As a result, the weft threads are bunched together by the securing element under tension. This is advantageous because the stress and strain induced by the tension are shared between all the weft threads in the bunch. As a result, a stress raising point of neighboring weft and warp strands will not be created.

In still further embodiments of the present invention, the second areas are positioned proximate to the center of the uncoated strips, which is advantageous for strengthening the border edges.

In still further embodiments of the present invention, the plastic fabric further comprises multiple spaced reinforced areas extending in the cross-machine direction of the fabric. The reinforced areas are adapted to have improved tear propagation resistance and/or improved weathering resistance and/or improved tensile strength than the non-reinforced areas. Weft threads having a higher density per unit length of the fabric and/or higher ultraviolet resistance and/or higher tensile strength than the weft threads outside the reinforced areas form the reinforced areas. The reinforced areas extend in cross-machine direction over the entire width of the fabric. The reinforced areas are equally distributed over the length of the fabric in machine direction separating the fabric into zones. Integrating the reinforced areas into the fabric is advantageous since it is possible to stop the propagation of a tear in machine direction with the reinforced areas should one occur.

In still further embodiments of the present invention, the fabric is used for agricultural and/or horticultural purposes and, more specifically the fabric is used for covering and protecting plants and/or fruits. Installation of the fabric to cover table grapes, cherries and soft berry fruits may be especially advantageous, since not only can rain or wind damage be prevented but also the ripening process can be positively influenced.

In still further embodiments of the present invention, a method for making a fabric comprises the steps of weaving a plastic fabric from warp threads extending in machine direction and weft threads extending in cross-machine direction, the plastic fabric having first areas with a first density of warp threads per unit width of the fabric and having two border edges extending in machine direction and defining a width of the fabric; and forming second areas having a second density of warp threads per unit width of the fabric that is lower than the first density, the second areas extending over the entire length of the fabric, the second density being adapted to allow threading of a securing element through the fabric to encircle a plurality of weft threads in the second areas such that the encircled weft threads are bunched together with the securing element under tension. The step of omitting a plurality of warp threads during the weaving process to form the second areas is advantageous for easy installation of the securing element.

In still further embodiments of the present invention, the method for making a fabric comprises the step of partially applying a plastic coating to one surface of the fabric leaving a strip adjacent to each of the border edges that is uncoated, the second areas being located within the uncoated strips. This is advantageous since the majority of the surface of the fabric is mechanically strengthened and made impermeable while the areas close the border edges remain uncoated enabling secure attachment of the securing elements while having a relatively high breaking load. A further advantage of leaving the strips adjacent to each of the border edges uncoated is an increase in tear resistance and tear propagation resistance. The decrease in breaking strength in the uncoated strips is compensated by the bunches of weft threads formed by the securing element under tension.

In still further embodiments of the present invention, the method for making a fabric comprises the steps of separating the fabric into zones by integrating a plurality of reinforced areas adapted to have improved tear propagation resistance, improved weathering resistance, and/or improved tensile strength than the non-reinforced areas and extending over the width of the fabric in cross-machine direction; and forming the reinforced areas spaced along the machine direction of the fabric by using weft threads having a higher density per unit length of the fabric and/or higher ultraviolet resistance and/or higher tensile strength. Integrating the reinforced areas into the fabric is advantageous since it is possible to stop the propagation of a tear in machine direction and/ or deflect the tear in cross-machine direction at the reinforced areas should a tear occur.

The above and other characteristics, features, and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### BRIEF DESCRIPTION OF THE DRAWINGS

Embodiments of the present invention will now be described, by way of example only, with reference to the accompanying drawings, in which:
Fig. 1 is a plan view of woven plastic fabric, in accordance with an embodiment of the present invention; and
Fig. 2 is a sectional plan view of the woven plastic fabric under tension, in accordance with an embodiment of the present invention.

Corresponding reference characters indicate corresponding parts throughout the several views. The exemplification set out herein illustrates exemplary embodiments of the invention, in one form, and such exemplification is not to be construed as limiting the scope of the invention in any manner.

### DESCRIPTION OF THE EMBODIMENTS

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

A woven plastic fabric in accordance with embodiments of the present invention includes, close to each border edge, an area having a lower density of warp threads per unit width compared to the adjacent areas that is large enough to allow effortless threading of a securing element, for example a tie-down rope, through the fabric to encircle a plurality of weft threads and at the same time small enough not to cause a substantial loss of overall strength of the fabric. Furthermore, the fabric includes multiple reinforced areas extending in a cross-machine direction of the fabric to improve the tear propagation resistance, the weathering resistance, and/or the tensile strength of the fabric. A plastic coating applied to at least one surface of the fabric makes the fabric impermeable and increases the mechanical strength of the fabric. The plastic coating is applied to the fabric such that a strip adjacent to each of the border edges is left uncoated to ensure easy and effective attachment of a securing element, such as a tie-sown rope. The woven plastic fabric in accordance with embodiments of the present invention can be used as a covering for agricultural and/or horticultural purpose, for example, for covering and protecting plants and/or fruits. The fabric is suitable for covering, for example, table grapes, cherries, and soft berry fruits, to protect the plants and fruits against damage from rain, hail, or wind and to extend the season of the fruits.

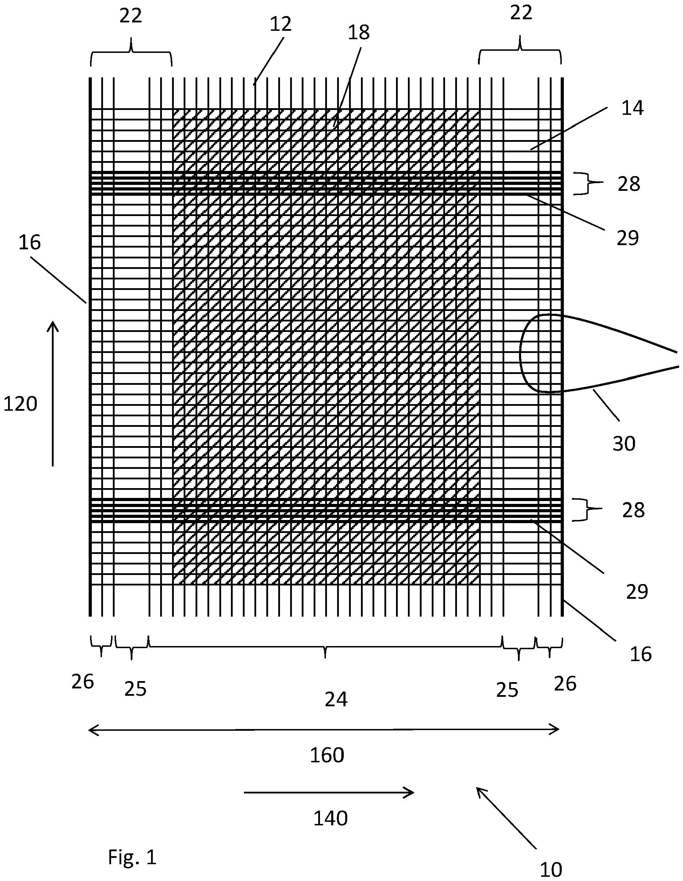

Referring to Fig. 1, a woven plastic fabric 10 is schematically illustrated in accordance with an embodiment of the present invention. The fabric 10 is woven from a plurality of warp threads 12 extending in machine direction 120 and a plurality of weft threats 14 extending in cross-machine direction 140. The weft threads 14 interweave with the warp threads 12 to form the woven fabric 10. The width 160 of the fabric 10 is defined by two border edges 16 running along the machine direction 120. The border edges 16 are adapted to prevent fraying and/or raveling of the fabric 10. The fabric 10 includes a first area 24 having a first density of warp threads 12 per unit width of the fabric, two second areas 25, one positioned on either side in machine direction 120 of the first area 24, having a second density of warp threads 12 per unit width of the fabric, wherein the second density is lower than the first density, and two third areas 26 each positioned between a second area 25 and a border edge 16 and having the same density of warp threads 12 per unit width of the fabric as the first area 24. The first area 24, the second areas 25, and the third areas 26 extend in machine direction 120 over the entire length of the fabric. The second areas 25 are preferably positioned proximate to the center of the uncoated strips 22. The second density of warp threads 12 per unit width of the fabric is preferably zero, which means that no warp threads 12 are present in the second areas 25.

The second density of the second areas 25 is adapted to allow threading of a plurality of securing elements 30 through the fabric 10. Preferably, each securing element 30 is threaded through the weft threads 14 to encircle a plurality of the weft threads 14 in the second area 25.

The second areas 25 are preferably manufactured by omitting warp thread during the weaving process, which can be easily done not only without extra cost but at a lower cost, since warp threads 12 are omitted. If enough warp threads 12 are left out during the weaving process, for example, such that each second area 25 covers a distance of about 5mm to 20mm or even less depending on the thickness of the securing element 30, the dimensions are such that a regular person does not have difficulties in threading the securing elements 30 through the weft threads 14 in area 25. However, a loss of, for example two times 20mm for both second areas 25 in a width of about 2,5m to 3m, which is a typical size for agricultural coverings, is not a great loss of overall strength.

The plastic fabric 10 in accordance with embodiments of the present invention is preferably made from a polyethylene material. For example, the warp threads 12 and/or the weft threads 14 can be made from a high-density polyethylene material in form of flat tapes. The high-density polyethylene material is preferably clear to allow a relatively high visible light transmittance. Other materials such as polyamide, polypropylene, ethylene-vinyl acetate or any other polymer materials can be used instead of the polyethylene material.

A plastic coating 18 is applied, preferably by extrusion, to at least one surface of the fabric 10, covering almost the entire first area 24, thereby leaving a strip 22 adjacent to each of the border edges 16 uncoated. By doing so, the center and majority of the fabric 10 is coated and, thus, made water-resistant or waterproof and also mechanically strengthened, while the strips 22 including the second areas 25 and the third areas 26 are left mechanically un-strengthened. The plastic coating 18 can be made of, for example, a low-density polyethylene material. The low-density polyethylene material is preferably clear to allow a relatively high visible light transmittance. If desired, the color and thickness of the coating can be adjusted to optimize light transmittance and temperature characteristics of the fabric for a specific plant and/or fruit. Other materials such as polyamide, polypropylene, ethylene-vinyl acetate or any other polymer materials can be used for the plastic coating.

A plurality of reinforced areas 28 extending in cross-machine direction 140 over the entire width 160 is formed from weft threads 29 having a higher density per unit length of the fabric and/or higher ultraviolet resistance and/or higher tensile strength than the weft threads 14 outside the reinforced areas 28. The reinforced areas 28 are adapted to have improved tear propagation resistance and/or improved weathering resistance and/or improved tensile strength than the non-reinforced areas 24, 25, and 26. By extending over the entire length 160 of the fabric 10 and by being spaced, preferably equally, over the entire length of the fabric 10, the reinforced areas 28 separate the fabric 10 into zones. The securing elements 30 are placed preferably within these zones. This has the advantage that should a tear in machine direction 120 originate from an attachment location of a securing element 30, the propagation of the tear in machine direction can be stopped and/or deflected in cross machine direction at a reinforced area 28. For example, the weft threads 29 can be made from a high-density polyethylene material in form of flat tapes. The high-density polyethylene material has preferably a higher tensile strength and/or a higher ultraviolet resistance that the material used for weft threads 14. When using a black material for weft strands 29, the reinforced areas may also provide some shade. Accordingly the length of the reinforced areas 28 can be adapted to the desired visible light transmittance of the entire fabric. Other materials such as polyamide, polypropylene, ethylene-vinyl acetate, or any other polymer materials can be used for the weft thread 29.

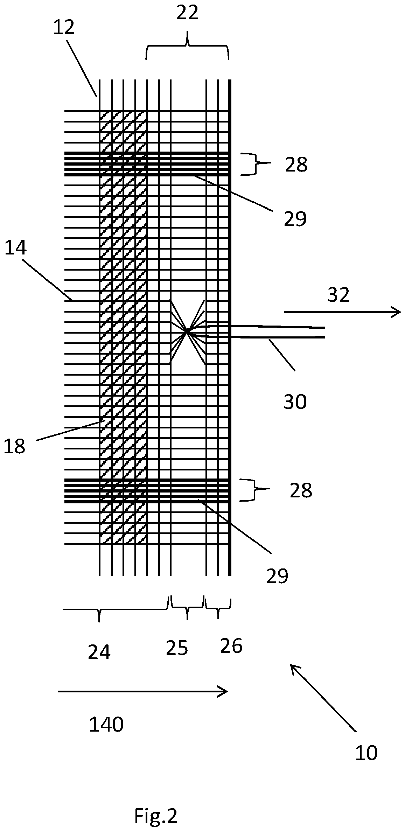

Referring to Fig. 2, a section of the woven plastic fabric 10 under tension is illustrated in accordance with an embodiment of the present invention. As can be seen the securing element 30 is threaded through the weft threads 14 to encircle a plurality of weft threads 14 in the second area 25. The encircled weft threads 14 are bunched together by the securing element 30 under tension 32. This is advantageous since due to the elastic nature of polyethylene or any other polymer material the encircled weft threads 14 extend and bunch together when the securing element 30 is under tension 32. Additionally, the weft threads 14 have a relatively high Youngs modulus and a relatively high elongation at break. Therefore, each of the encircled weft threads 14 contributes to the overall result because the stress and strain induced by the tension 32 are shared between all the weft threads 14 in the bunch. As a result, a stress raising point of neighboring weft threads 14 and warp threads 12 will not be created and the force that can be withstood before ripping or tearing (breaking load) is increased significantly compared to typical prior art agricultural covering. Accordingly, the fabric 10 is, especially in the uncoated strip 22, mechanically stronger and has an improved resistance to tearing and tear propagation, and tensile forces 32 compared to prior art fabrics typically used as agricultural coverings. This is achieved by embodiment of the present invention without reinforcing the border region of the fabric as often done in the prior art. In the uncoated strip 22, the decrease of breaking strength due to being uncoated is compensated by the bunches of weft threads 14 formed by the securing element 30 under tension.

A method for making the fabric 10 as illustrated in Figs. 1 and 2 includes the steps of weaving the plastic fabric 10 from warp threads 12 extending in machine direction 120 and weft threads 14 extending in cross-machine direction 140 such that the plastic fabric 10 has a first area 24 with a first density of warp threads per unit width of the fabric and two border edges 16 extending in machine direction and defining a width of the fabric. In a further step second areas 25 having a second density of warp threads per unit width of the fabric that is lower than the first density are formed such that the second areas 25 extend over the entire length of the fabric and such that the second density is adapted to allow threading of a securing element 30 through the fabric 10 to encircle a plurality of weft threads 14 in the second areas 25 such that the encircled weft threads 14 are bunched together with the securing element 30 under tension. This leads to an increased breaking strength of the second areas 25. In a still further step, the second areas 25 are formed by omitting a plurality of warp threads 12 during the weaving process. In a still further step, a plastic coating 18 is partially applied to one surface of the fabric 10 leaving a strip 22 adjacent to each of the border edges 16 that is uncoated. The plastic coating provides impermeability to the fabric 10 and increases the breaking strength. The second areas 25 are located within the uncoated strips 22. In a still further step the fabric 10 is separated into zones by integrating a plurality of reinforced areas 28 adapted to have improved tear propagation resistance, and/or improved weathering resistance, and/or improved tensile strength than the non-reinforced areas and extending over the width 160 of the fabric in cross-machine direction 140. In a still further step, the reinforced areas 28 are spaced along the machine direction 120 of the fabric and are formed using weft threads 29 having a higher density per unit length of the fabric and/or higher ultraviolet resistance and/or higher tensile strength than weft threads 14. The fabric 10 in accordance with embodiments of the present invention can be attached to structures, such as poles and/or wires, using the pre-installed securing elements 30 to form a canopy or covering for agricultural and/or horticultural purposes.

By providing a woven plastic fabric 10 that includes, close to each border edge 16, an area 25 having a lower density of warp threads 12 per unit width compared to the adjacent areas 24, 26, effortless threading of a securing element 30, for example a tie-down rope, through the fabric 10 to encircle a plurality of weft threads 14 in the area 25 is enabled, while the overall mechanically strength of the fabric is maintained. When the securing element 30 is under tension, the encircled weft threads 14 bunch together increasing the breaking strength of the strips 22 located at the border edges 16 without creating a single stress point. By providing a woven plastic fabric 10 that includes multiple reinforced areas 28 spaced in machine direction 120 and extending in a cross-machine direction 140 of the fabric, the tear propagation resistance, and/or the weathering resistance and/or the tensile strength of the fabric 10 is improved. By applying a plastic coating 18 to at least one surface of the fabric 10, the fabric is made impermeable and the mechanical strength of the fabric is increased. By applying the plastic coating 18 such that a strip 22 adjacent to each of the border edges 16 is left uncoated, easy and effective attachment of a securing element 30 is enabled. By attaching the securing element 30 to the fabric 10 in the uncoated strip 22 by encircling a plurality of weft threads 14, the force that can be withstood before ripping or tearing (breaking load) is increased compared to typical prior art agricultural coverings.

It is to be understood that although preferred embodiments, specific constructions and configurations, as well as materials, have been discussed herein for devices according to the present invention, various changes or modifications in form and detail may be made without departing from the scope and spirit of this invention. For example, the various profiles may be constructed to form a framework that supports and secures panels of various sizes and functions.

The invention is not limited to the embodiments described herein, which may be modified or varied without departing from the scope of the invention.

Other arrangements for accomplishing the objectives of embodiments of the present invention will be obvious for those skilled in the art.

## Claims

1. A plastic fabric (10) woven from warp threads (12) extending in machine direction (120) and weft threads (14) extending in cross-machine direction (140), the width (160) of the fabric being defined by two border edges (16) running along the machine direction (120), the plastic fabric (10) comprising:
a waterproof plastic coating (18) applied to at least one surface of the fabric (10), the coating (18) covering the fabric partially leaving a strip (22) adjacent to each of the border edges (16) uncoated; and
the plastic fabric (10) having a first area (24) with a first density of warp threads per unit width of the fabric and second areas (25) with a second density of warp threads per unit width of the fabric positioned on either side of the first area (24) and running along with the first area (24) in machine direction (120), the second density being lower than the first density, the second areas (25) being located within the uncoated strips (22), and the second areas (25) extending over the entire length of the fabric.

2. The plastic fabric (10) according to claim 1, wherein the second density is adapted to allow threading of a securing element (30) through the fabric (10) in machine direction (120).

3. The plastic fabric (10) according to claim 1 or 2, further comprising third areas (26), the third areas (26) being located between the second areas (25) and the border edges (16), the third areas (26) having a higher density of warp threads per unit width of the fabric than the second areas (25).

4. The plastic fabric (10) according to any previous claim, wherein the second areas (25) are manufactured by omitting warp threads (12) during the weaving process.

5. The plastic fabric (10) according to any previous claim, wherein a securing element (30) is threaded through the weft threads (14).

6. The plastic fabric (10) according to any previous claim, wherein the securing element (30) is threaded through the weft threads (14) to encircle a plurality of weft threads (14) in the second area (25).

7. The plastic fabric (10) according to any previous claim, wherein the weft threads (14) are encircled by a securing element (30) and are bunched together by the securing element (30) under tension.

8. The plastic fabric (10) according to any previous claim, wherein the second areas (25) are positioned proximate to the center of the uncoated strips (22).

9. The plastic fabric (10) according to any previous claim, wherein the plastic coating (18) is extruded onto the fabric (10).

10. The plastic fabric (10) according to any previous claim, further comprising:
multiple spaced reinforced areas (28) extending in the cross-machine direction (140) of the fabric (10);
wherein the reinforced areas (28) are adapted to have improved tear propagation resistance and/or improved weathering resistance and/or improved tensile strength than the non-reinforced areas;
wherein weft threads (29) having a higher density per unit length of the fabric and/or higher ultraviolet resistance and/or higher tensile strength than the weft threads (14) outside the reinforced areas form the reinforced areas (28).

11. The plastic fabric (10) according to claim 8, wherein the reinforced areas (28) extend in cross-machine direction (140) over the entire width (160) of the fabric.

12. The plastic fabric (10) according to claim 7 or 8, wherein the reinforced areas (28) are equally distributed over the length of the fabric in machine direction (120) separating the fabric into zones.

13. The plastic fabric (10) according to any previous claim, wherein the fabric (10) is used for agricultural and/or horticultural purposes.

14. The plastic fabric (10) according to any previous claim, wherein the fabric (10) is used for covering and protecting plants and/or fruits.

15. A method for making a fabric (10) according to any previous claim, comprising the steps of:
weaving a plastic fabric (10) from warp threads (12) extending in machine direction (120) and weft threads (14) extending in cross-machine direction (140), the plastic fabric (10) having first areas (24) with a first density of warp threads per unit width of the fabric and having two border edges (16) extending in machine direction and defining a width of the fabric;
forming second areas (25) having a second density of warp threads per unit width of the fabric that is lower than the first density, the second areas (25) extending over the entire length of the fabric; and
adapting the second density to allow threading of a securing element (30) through the fabric (10) to encircle a plurality of weft threads (14) in the second areas (25) such that the encircled weft threads (14) are bunched together with the securing element (30) under tension.

16. The method of claim 15, further comprising:
omitting a plurality of warp threads (12) during the weaving process to form the second areas (25).

17. The method according to claim 15 or 16, further comprising:
partially applying a plastic coating (18) to at least one surface of the fabric (10) leaving a strip (22) adjacent to each of the border edges (16) that is uncoated, the second areas (25) being located within the uncoated strips (22).

18. The method according to any one of claims 15 to 17, further comprising:
separating the fabric (10) into zones by integrating a plurality of reinforced areas (28) adapted to have improved tear propagation resistance and/or improved weathering resistance and/or improved tensile strength than the non-reinforced areas and extending over the width (160) of the fabric in cross-machine direction (140).

19. The method according to claim 18, further including the step of:
forming the reinforced areas (28) spaced along the machine direction (120) of the fabric by using weft threads (29) having a higher density per unit length of the fabric and/or higher ultraviolet resistance and/or higher tensile strength.
